(19) **Europäisches Patentamt / European Patent Office / Office européen des brevets**

(11) **EP 4 748 789 A1**

(12) # EUROPEAN PATENT APPLICATION
published in accordance with Art. 153(4) EPC

(43) Date of publication:
27.05.2026 Bulletin 2026/22

(21) Application number: 23949632.6

(22) Date of filing: 29.12.2023

(51) International Patent Classification (IPC):
$C01B\ 32/182^{(2017.01)}$ $B01D\ 53/14^{(2006.01)}$

(52) Cooperative Patent Classification (CPC):
B01D 53/14; B01J 21/00; B01J 21/18;
B01J 23/745; B01J 23/75; B01J 27/24;
B82Y 30/00; B82Y 40/00; C01B 32/182;
Y02C 20/40

(86) International application number:
PCT/CN2023/143530

(87) International publication number:
WO 2025/039455 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 18.08.2023 CN 202311049627

(71) Applicants:
• China Petroleum & Chemical Corporation
Beijing 100728 (CN)
• Sinopec Oilfield Service Corporation
Beijing 100728 (CN)
• Sinopec Petroleum Engineering Corporation
Dongying, Shandong 257026 (CN)

(72) Inventors:
• JING, Shaodong
Dongying, Shandong 257026 (CN)
• WANG, Zuohua
Dongying, Shandong 257026 (CN)
• ZHANG, Jian
Dongying, Shandong 257026 (CN)
• LI, Qingfang
Dongying, Shandong 257026 (CN)
• WANG, Zhi
Dongying, Shandong 257026 (CN)
• LI, Wenbo
Beijing 100728 (CN)
• CHEN, Xinde
Dongying, Shandong 257026 (CN)

(74) Representative: Hoffmann Eitle
Patent- und Rechtsanwälte PartmbB
Arabellastraße 30
81925 München (DE)

(54) **GRAPHENE AEROGEL, REGENERATED CATALYST AND USE THEREOF, AND METHOD FOR REGENERATING CO2-RICH AMINE SOLUTION**

(57) Disclosed are a graphene aerogel, a regenerated catalyst and the use thereof, and a method for regenerating a $CO_2$-rich amine solution. The B acid content of the graphene aerogel is 0.001-0.05 mmol/g, the specific surface area thereof is 40-200 $m^2$/g, and the ratio of the volume of pores having a pore diameter of 20 nm or below to the total pore volume of the graphene aerogel is not smaller than 50%. The graphene aerogel is applied to a regenerated catalyst of a $CO_2$-rich amine solution, and is helpful in catalyzing the desorption of $CO_2$, reducing the initial temperature and finish temperature of desorption, increasing the desorption rate, shortening the desorption time, reducing the desorption energy consumption and increasing the desorption quantity.

| 1 μm | EHT = 10.00 kV | Signal A = InLens | Date: 2 Jul 2022 |
| | WD = 4.5 mm | Mag = 50.00 K X | Time: 10:10:08 |

FIG. 1

EP 4 748 789 A1

**Description**

**CROSS-REFERENCE TO RELATED APPLICATIONS**

The application claims the benefit of the China patent application No. "202311049627.1", filed on August 18, 2023, the content of which is specifically and entirely incorporated herein by reference.

**TECHNICAL FIELD**

The present invention relates to the technical field of desorption and regeneration of $CO_2$-rich amine solution, in particular to a graphene aerogel, regenerated catalyst and use thereof, and a method for regenerating the $CO_2$-rich amine solution.

**BACKGROUND ART**

$CO_2$ emission reduction has become an important development strategy in China and the world. The International Energy Agency (IEA) indicates that CCUS ($CO_2$ Capture, Utilization and Storage) is the only technology among the emission reduction goals that can directly reduce carbon emissions in key areas and decrease the existing $CO_2$ concentration to balance unavoidable carbon dioxide emissions. Large scale, low cost and commercialization will be the future trends of the CCUS projects. Coal is currently the predominant energy source in China, coal-fired power plants are the predominant emission source of $CO_2$ in China, the capture, recovery, utilization and storage of $CO_2$ in flue gas from the coal-fired power plants are the key to the carbon dioxide emission reduction in China, and the mandatory route for large-scale application of CCUS technologies. $CO_2$ capture technology is reported to be the most critical sector of the large-scale application of said CCUS technologies, it determines the purity and cost of air supply, and the energy consumption in the $CO_2$ capture process accounts for more than 60% of the total energy consumption of CCUS projects, thus the reduction of energy consumption is critical for capturing $CO_2$ in the flue gas.

The current methods for $CO_2$ capture and purification mainly comprise chemical absorption method, physical absorption and physico-chemical absorption method, solid adsorption method, membrane treatment method, and cryogenic separation method, wherein the chemical absorption method is undoubtedly the optimal choice at present from the viewpoints of application time, technical maturity and prospects. Chemical absorption method achieves separation of $CO_2$ from other gases by selective chemical reaction of the absorbent with $CO_2$ in the mixed flue gases, and $CO_2$ is regenerated by a reverse reaction of the reaction, thereby releasing high purity $CO_2$ for enrichment.

The key bottleneck that currently limits the large-scale application of the chemical absorption method is the large energy consumption and high costs. In order to reduce the energy consumption, researchers have made efforts in two aspects: the research and development of efficient absorbents and the process optimization of the capture systems. CN109316903A discloses a mesoporous solid acid-alkaline catalyst for desorption of $CO_2$-rich amine solution, the mesoporous solid acid-alkaline catalyst is used for loading $Fe_2O_3$ (ferric oxide) onto a carrier molecular sieve MCM-41, the catalyst is easy to separate, the stability is good, and the recycling effect is realized, but the desorption requires a high temperature that is up to 98°C. CN106984333A discloses a supported catalyst for regenerating amine solution rich in carbon dioxide, the catalyst is a metal oxide-carrying sulfate radical-type solid superacid catalyst, wherein the carrier is $\gamma$-$Al_2O_3$, the catalyst can reduce the desorption energy consumption of ethanolamine (MEA) compared to $SO_4^{2-}$/$ZrO_2$ catalyst and $\gamma$-$Al_2O_3$, but it also requires a high desorption temperature.

Therefore, how to further lower the desorption temperature and decrease the energy consumption is an important problem to be urgently solved in the $CO_2$ capture and purification with the chemical absorption method.

**SUMMARY OF THE INVENTION**

The present application aims to overcome the defects in the prior art with respect to the high carbon dioxide desorption temperature and high energy consumption, and provides a graphene aerogel, a regenerated catalyst and use thereof, and a method for regenerating a $CO_2$-rich amine solution, the graphene aerogel is applied in the regenerated catalyst, which can expedite the desorption reaction, decrease the initial temperature of reaction, and reduce the energy consumption.

In order to achieve the above object, the first aspect of the present invention provides a graphene aerogel, the B acid content of the graphene aerogel is within the range of 0.001-0.05 mmol/g, the specific surface area of the graphene aerogel is within the range of 40-200 $m^2$/g, and the ratio of the volume of pores having a pore diameter of 20 nm or below to the total pore volume of the graphene aerogel is not smaller than 50%.

The second aspect of the present invention provides a regenerated catalyst comprising a carrier and a metal component loaded on the carrier; the metal component has Lewis acid characteristics, and the carrier is the graphene aerogel according to the first aspect.

The third aspect the present invention provides a use of the regenerated catalyst according to the second aspect in the regeneration of $CO_2$-rich amine solution.

The fourth aspect the present invention provides a method for regenerating a $CO_2$-rich amine solution, the $CO_2$-rich amine solution contacts with a catalyst under the regeneration condition to carry out the desorption of $CO_2$; Wherein the catalyst is the regenerated catalyst according to the second aspect.

The graphene aerogel provided by the present invention has an appropriate amount of a protonic acid (B acid), a suitable pore number and pore structure such that the regenerated catalyst used in the $CO_2$-rich amine solution may produce the synergistic effect with the metal components, it is capable of providing the protonic acid necessary for the desorption process, and can also provide the necessary basic groups to expedite the desorption reaction, it is helpful in catalyzing the desorption of $CO_2$, reducing the initial temperature and finish temperature of desorption, increasing the desorption rate, shortening the desorption time, reducing the desorption energy consumption and increasing the desorption quantity; in addition, it has a high mechanical strength, thereby increasing the cycle life. It is preferred that the graphene aerogel has a three-dimensional porous network formed by stacking the two-dimensional sheet-like graphene, wherein the through-holes having various sizes are distributed between the lamellas to allow passing of solution and facilitate increasing the compression strength of the graphene aerogel, thereby further improving stability of the catalyst.

## BRIEF DESCRIPTION OF THE DRAWINGS

FIG. 1 illustrates a scanning electron microscope (SEM) photograph of the graphene aerogel A1 obtained in preparation example 1;

FIG. 2 illustrates a transmission electron microscope (TEM) photograph of the graphene aerogel A1 obtained in preparation example 1;

FIG. 3 illustrates an X-ray photoelectron spectrogram of the graphene aerogel A1 obtained in preparation example 1;

FIG. 4 illustrates an XPS peak spectrogram of O1s of the graphene aerogel A1 obtained in preparation example 1;

FIG. 5 illustrates a pore diameter distribution curve of the graphene aerogel A1 obtained in preparation example 1.

## DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present invention provides a graphene aerogel, the B acid content of the graphene aerogel is within the range of 0.001-0.05 mmol/g, the specific surface area of the graphene aerogel is within the range of 40-200 $m^2$/g, and the ratio of the volume of pores having a pore diameter of 20 nm or below to the total pore volume of the graphene aerogel is not smaller than 50%.

According to the invention, the graphene aerogel has a suitable amount of protonic acid (B acid), which is beneficial to improving the $CO_2$ desorption rate. Preferably, the B acid content of the graphene aerogel is within the range of 0.01-0.03 mmol/g. The B acid content of the graphene aerogel is controlled within the preferable range, in combination with the suitable pore number and the pore structure, it is conducive to promoting the $CO_2$ desorption reaction, and fundamentally reducing the energy consumption of the reaction.

In the invention, the content of B acid (or L acid) is characterized with a pyridine infrared method, the specific test method is as follows: pressing 0.0089g of a sample to be detected into a self-supporting sheet with a diameter of 1.3 cm, placing the self-supporting sheet in an in-situ pool, vacuumizing the sample at 300°C, cooling to room temperature to measure a background infrared spectrogram, adsorbing saturated pyridine steam until the adsorption of said sample is saturated, recording the spectrogram, after purging with helium gas for 1h, vacuumizing and carrying out a programmed temperature rise desorption (0-350°C), recording the spectrogram per a temperature interval of 20°C, recording the standard positions of B acid and L acid in the obtained pyridine infrared spectrogram at 1540 $cm^{-1}$ and 1450 $cm^{-1}$ respectively, integrating peaks at corresponding positions in the spectrogram, carrying out spectrogram peak area normalization, and then calculating the acid amount according to the following formula:

$$C = \frac{K_{L/B} \times I_{L/B} \times R^2}{4W}$$

Wherein C denotes an acid amount, with an unit of mmol/g; $K_{L/B}$ denotes the absorption coefficient of L acid or B acid, which is 1.42 and 1.88 respectively, that is, $K_L$ denotes the absorption coefficient of L acid and it is 1.42, $K_B$ denotes the absorption coefficient of B acid and it is 1.88, and the unit is mmol/cm; $I_{L/B}$ denotes the peak area of L acid or B acid, and the unit is cm$^{-1}$; R denotes a diameter of the tablet, with an unit of cm; W denotes the tablet weight in an unit of g.

The graphene aerogel in the invention has a suitable pore number and pore structure, the specific surface area of the graphene aerogel is within the range of 50-200 m$^2$/g, preferably within the range of 100-120 m$^2$/g. Under the preferable condition, it can ensure that the graphene aerogel has an appropriate contact area with $CO_2$-rich amine solution when the graphene aerogel is used in the regenerated catalyst of $CO_2$-rich amine solution, so that the graphene aerogel is beneficial to catalyzing $CO_2$ desorption, and improving the mechanical strength of the graphene aerogel.

In some preferred embodiments of the invention, the total pore volume of the graphene aerogel is within the range of 0.01-0.5mL/g, more preferably within the range of 0.1-0.3 mL/g.

In some preferred embodiments of the invention, the ratio of the volume of pores having a pore diameter of 20 nm or below to the total pore volume of the graphene aerogel is not lower than 50%, more preferably within the range of 55-90%, further preferably within the range of 70-80%. The graphene aerogel provided by the invention can improve the catalytic efficiency when used as a catalyst carrier by ensuring that the pores having a pore diameter of 20 nm or below is within a certain content range, thereby reducing the desorption temperature, shortening the desorption time and improving the mechanical strength of the catalyst, the reason may be that the pores having a pore diameter of 20 nm or below are subsequently loaded with metal component for preparing a catalyst, the metal component is filled in the pores, such that the metal component is anchored on the graphene aerogel, which is beneficial to exerting activity of the metal component, the cooperation of the metal component with a suitable amount of B acid is capable of improving the catalytic efficiency, thereby decreasing the desorption temperature and shortening the desorption time, and it is conducive to reducing the loss rate of the catalyst during the regeneration process of alcohol amine solution and prolonging the service life of said catalyst.

In the invention, the specific surface area, pore volume and pore diameter distribution are measured by the N$_2$ adsorption-desorption isotherm method.

In some preferred embodiments of the invention, the chemical composition of graphene aerogel is characterized by X-ray photoelectron spectroscopy (XPS), which is tested on the ESCALAB 250XI model X-ray photoelectron spectrometer manufactured by Thermo Fisher Scientific Inc. in the United States of America (USA) under the test conditions comprising: the excitation source is A1 K$\alpha$ rays, and the scanning range is 0-1,200eV.

According to some preferred embodiments of the invention, the graphene aerogel comprises C element, N element and O element. In the X-ray photoelectron spectrogram of the graphene aerogel, the corresponding characteristic peaks of C element, N element and O element are shown, which indicates that the graphene aerogel contains C element, N element and O element. In the graphene aerogel, the total amount of C elements is determined based on the area of C 1s spectral peak in the X-ray photoelectron spectrogram, the total amount of O elements is determined based on the area of O 1s spectral peak, and the total amount of N elements is determined based on the area of N 1s spectral peak. Preferably, molar ratio of said C element, said O element and said N element is (1-60): (5-30): (0.5-5); more preferably (15-35): (10-20): (1-2), for example, the molar ratio may be 15: 10: 1, 15: 15: 1, 15: 20: 1, 20: 10: 1, 25: 15: 1, 25: 20: 1, 30: 10: 1, 30: 15: 1, 30: 20: 1, 35: 10: 1, 35: 15: 1, 35: 20: 1, 15: 10: 2, 15: 15: 2, 15: 20: 2, 20: 10: 2, 25: 15: 2, 25: 20: 2, 30: 10: 2, 30: 15: 2, 35: 10: 2, 35: 15: 2, 35: 20: 2, and other typical and non-limiting molar ratios.

In some preferred embodiments of the present invention, the spectrum of O 1s in the X-ray photoelectron spectrogram of the graphene aerogel of the invention consists of peaks of hydroxyl oxygen, carbonyl oxygen and carboxyl oxygen, demonstrating that the oxygen species in the graphene aerogel include hydroxyl oxygen, carbonyl oxygen and carboxyl oxygen. The molar ratio of hydroxyl oxygen, carbonyl oxygen and carboxyl oxygen through peak areas of the split peak is (1-20): (0.1-5): (1-5), preferably (1-5): (0.5-2): (1-2). For example, the molar ratio may be 1: 0.5: 1, 1: 1: 1, 1: 1.5: 1, 1: 2: 1, 2: 0.5: 1, 2: 1: 1, 2: 1.5: 1, 2: 2: 1, 3: 0.5: 1, 3: 1: 1, 3: 1.5: 1, 3: 2: 1, 4: 0.5: 1, 4: 1: 1, 4: 1.5: 1, 4: 2: 1, 5: 0.5: 1, 5: 1: 1, 5: 1.5: 1, 5: 2: 1, and other typical and non-limiting molar ratios. Under the preferable distribution condition of the hydroxyl oxygen, the carbonyl oxygen and the carboxyl oxygen, it is conducive to further improving hydrophilicity of the graphene aerogel, and is beneficial to the desorption.

In some preferred embodiments of the present invention, the graphene aerogel has a three-dimensional porous network structure formed by stacking the two-dimensional graphene sheets.

In some preferred embodiments of the invention, the average sheet thickness of the two-dimensional graphene sheet in the graphene aerogel is within the range of 10-200 nm, more preferably within the range of 50-100 nm, as determined by the scanning electron microscopy photograph (SEM photograph).

Preferably, the two-dimensional graphene sheet has an average sheet length within the range of 0.1-10 $\mu$m,

more preferably within the range of 1-5 $\mu$m.

In the invention, "sheet length" refers to the maximum straight-line distance between two points on the same plane of a sheet, and "sheet thickness" refers to the maximum straight-line distance between two points on a plane perpendicular to the sheet length. The sheet length and sheet thickness of 50 two-dimensional graphene sheets in the graphene aerogel are counted by a scanning electron microscope, and the average values of said sheet lengths and sheet thicknesses are calculated.

In the invention, the surface morphology of graphene aerogel is observed by the Scanning Electron Microscope (SEM), the SEM analysis is conducted on the model S-4800 scanning electron microscope manufactured by Hitachi Corporation in Japan, with a test voltage of 1-10kV and a magnification of 0.5-50k.

The internal structure of the graphene aerogel is characterized by the Transmission Electron Microscope (TEM), the TEM assay is performed on the model TECNAI G2 F20 emission transmission electron microscope manufactured by the FEI Incorporation in the USA, with a test voltage of 100-500kV and a magnification of 1-100k.

In the scanning electron microscope photograph (SEM photograph), the graphene aerogel has a three-dimensional porous network structure formed by stacking two-dimensional graphene sheets, the dimensions of sheet layers are relatively uniform and the stacking is dense, more connections are formed among the sheets, abundant pores are distributed among the sheet layers as can be seen from further amplification, and the internal structure represented by the transmission electron microscope photograph (TEM photograph) shows that the network structure is formed inside the graphene aerogel, the network structure has a desirable dispersibility, which is conducive to the transmission of media.

In some preferred embodiments of the invention, the compression strength of said graphene aerogel is above 30kPa, or even up to 80kPa, more preferably within the range of 40-50kPa. In the invention, the compression strength of said graphene aerogel is associated with the morphology of said graphene aerogel, the pore number and the pore structure; by ensuring that the content of pores having a pore diameter of 20 nm or below is within a certain content range, it is conducive to improving the compression strength of the graphene aerogel while ensuring the shuttling of a solution. Under the preferable compression strength, it is favorable for recycling and reusing the graphene aerogel, and reducing loss. In contrast, the compression strength of graphene aerogel in the prior art is typically within the range of 10-30kPa.

In the invention, the test conditions of the compression strength of graphene aerogel include: pressing the graphene aerogel to be tested into a cylindrical test piece with a height of 10mm and a diameter of 10mm, soaking the prepared test piece in physiological saline at 37°C, then heating in a thermostatic water bath for 24 hours, accurately measuring the individual diameter of each test piece to a precision of 0.02mm by using a vernier caliper, vertically pressurizing the test piece on an electronic universal testing machine by adopting a preload of 5N and a loading speed of 1 mm/min, and recording the maximum load value when the test piece ruptures. The compression strength P=F/S, wherein F denotes the maximum load value (N) upon fracture of the test piece, S denotes the base area (mm$^2$) of the cylindrical test piece, the obtained compression strength unit is MPa, which is converted into the unit of kPa.

In some preferred embodiments of the present invention, the method for preparing the graphene aerogel comprises the following steps:

(1) Uniformly mixing the dispersion liquid containing the graphene oxide with a reducing agent, and carrying out the reduction reaction to obtain a graphene hydrogel;
(2) Removing the solvent in said graphene hydrogel to obtain a graphene aerogel intermediate product;
(3) Contacting the graphene aerogel intermediate product with an acidic solution to perform an activation reaction.

According to the invention, after the graphene aerogel intermediate product is prepared by a method of initially performing oxidation and subsequently implementing reduction, an acid solution is used for activating the graphene aerogel intermediate product, such that the graphene aerogel has a suitable amount of protonic acid, an appropriate pore number and pore structure, when the prepared graphene aerogel is applied in the desorption process after composite amine capture of $CO_2$, it can expedite the $CO_2$ desorption.

In some preferred embodiments of the present invention, the concentration of the dispersion liquid containing graphene oxide is within the range of 0.5-10mg/mL, more preferably within the range of 1-3mg/mL. The source of the graphene oxide is not particularly limited in the invention, and the graphene oxide may be commercially available or produced with the conventional preparation method of graphene oxide in the field, for example, the graphene oxide may be prepared by a Hummers method or a modified Hummers method, and the techniques for preparing the graphene oxide by the Hummers method or the modified Hummers method are well-known among those skilled in the art and can be performed with reference to the prior art.

In some preferred embodiments of the invention, the mass ratio of the reducing agent to the graphene oxide is 0.001-2: 1, in order to obtain the graphene aerogel with a balance between a suitable pore structure and a desirable compression strength, the mass ratio of the reducing agent to the graphene oxide is preferably 0.004-1: 1.

The reducing agents for reducing the graphene oxide known in the art can be used in the invention, for example, the reducing agent may be ethylenediamine, ascorbic acid, and the like.

In some preferred embodiments of the invention, the reducing agent is ethylenediamine. When the ethylenediamine is used as a reducing agent, it is not only beneficial to improving the reduction degree of the graphene, but also capable of playing a crosslinking role; in addition, the ethylenediamine is a weak reducing agent, such that the final product has a fluffy structure and a suitable pore amount and pore structure, thereby promoting the $CO_2$ desorption reaction. Moreover, the product hydrophilicity can be enhanced by using the ethylenediamine, so that the addition of an additional cross-linking agent is not required, and the obtained graphene aerogel has a strong hydrophilicity.

In some preferred embodiments of the invention, the temperature of the reduction reaction in step (1) is within the range of 60-180°C, preferably 80-100°C; the time is 6-18h, preferably 6-10 h.

In the invention, the mode of mixing the dispersion liquid containing graphene oxide with the reducing agent is not particularly limited, and the mixing method may be performed by using ultrasonic waves and/or stirring, as long as the dispersion liquid and the reducing agent can be uniformly mixed.

In the present invention, the solvent in the graphene hydrogel may be removed by any conventional method in the art, as long as the solvent in the graphene hydrogel can be effectively removed to obtain graphene aerogel, for example, the mode of removing the solvent in the graphene hydrogel includes: soaking the graphene hydrogel in an aqueous alcohol solution, and then performing a first drying.

In some preferred embodiments of the invention, the volume content of alcohol in the aqueous alcohol solution is within the range of 10-50%, more preferably within the range of 20-30%; the alcohol may be a C1-C5 monohydric alcohol, for example, at least one of ethanol, methanol and isopropanol.

The dosage of the aqueous alcohol solution in the present invention is not particularly limited, as long as the graphene hydrogel can be completely immersed in the aqueous alcohol solution.

According to the invention, the first drying may be performed in various manners, and in some specific embodiments of the present invention, the first drying includes: freezing at a temperature range from -10°C to -30°C for 1-12h, and then freezing and drying at a temperature range from -40°C to -120°C for 24-60h. In the present invention, by using ethylenediamine as a reducing agent and controlling the temperature gradient of the first drying, it is possible to ensure that the graphene aerogel has a suitable pore amount and pore structure, safeguard stability of the internal structure of the graphene aerogel, and improve the compression strength of the graphene aerogel, preferably, the first drying includes: initially freezing at a temperature range from -15°C to -25°C for 1-5h, and then freezing and drying at a temperature range from -50°C to -90°C for 24-36h.

In the invention, the acid solution is adopted to activate the graphene aerogel intermediate product, so that the graphene aerogel contains a suitable amount of protonic acid, which provides an acid site for desorption of carbon dioxide with the alcohol amine solution. In some embodiments of the present invention, the acidic solution is provided by an aqueous solution of an acid, and the present invention has a wide selection range for the specific kind of the acid, it may be an organic acid or an inorganic acid commonly used in the field, such as at least one selected from the group consisting of nitric acid, hydrochloric acid, sulfuric acid, oxalic acid and acetic acid, preferably, the acid is selected from nitric acid and/or hydrochloric acid.

In some preferred embodiments of the invention, the concentration of the aqueous acid solution is 4-10 mol/L, more preferably 5-8 mol/L.

In some embodiments of the invention, for the sake of ensuring that the produced graphene aerogel has a suitable content of B acid, the volume ratio of the acidic solution to the graphene aerogel intermediate product is 1-2.5: 1, more preferably 1-2: 1, further preferably 1-1.5: 1.

In some preferred embodiments of the invention, the temperature of the activation reaction is within the range of 40-90°C, more preferably within the range of 60-80°C; the time of the activation reaction is 2-8h, more preferably 2-4h; an use of the preferred embodiments is helpful to retain more active sites without disrupting the graphene aerogel structure.

In some preferred embodiments of the invention, the activation reaction is carried out under the stirring conditions in order to promote sufficient contact between the graphene aerogel intermediate product and the acidic solution, and increase the activation reaction rate.

In some preferred embodiments of the invention, the preparation method further comprises: subjecting the product obtained from the activation reaction to the washing and secondary drying. The washing and the second drying may be performed using the conventional operating conditions in the art, as long as the residual acidic solution in the product is removed, the present invention is not particularly limited thereto. Preferably, the temperature of the second drying is within the range of 60-120°C, more preferably within the range of 100-120°C, and the time is 8-24h, more preferably 10-15h.

The second aspect of the invention provides a regenerated catalyst comprising a carrier and a metal component loaded on the carrier; the metal component has Lewis acid characteristics, and the carrier is the graphene aerogel according to the first aspect.

According to the invention, a metal component with Lewis acid characteristics is loaded on the graphene aerogel, so that the regenerated catalyst not only can provide protonic acid necessary for the desorption process, but also can provide necessary alkaline groups to promote the desorption reaction, and fundamentally reduce the energy consumption of the reaction. In the invention, the metal component is coupled with graphene aerogel through a chemical bond, so that the interaction between the carrier and the metal component can be improved under the circumstance, the single-center adsorption-desorption is changed into multi-center adsorption-desorption, thereby further improving the adsorption-desorption capability.

In the present invention, the term "Lewis acid" refers to a molecule or ion capable of accepting an external electron. The metal component with Lewis acid characteristics is combined on the graphene aerogel through a chemical bond, and can provide L acid in the regenerated catalyst.

In some preferred embodiments of the invention, the regenerated catalyst comprises B acid and L acid, and the B acid content is within the range of 0.0005-0.02 mmol/g, more preferably within the range of 0.008-0.016 mmol/g.

In some preferred embodiments of the present invention, the ratio of L acid to B acid in the regenerated catalyst can be adjusted by controlling the loading amount of said metal component, and in order to improve the desorption performance of the product, the molar ratio of the B acid to the L acid in the regenerated catalyst is preferably 0.01-1: 1, more preferably 0.1-0.5: 1, further preferably 0.1-0.2: 1. The molar ratio of the L acid to the B acid is regulated and controlled within the preferable range, so that the desorption efficiency is improved, and the energy consumption is reduced.

In the invention, the B acid, L acid and their relative contents in the regenerated catalyst are measured by the pyridine infrared method, which is the same as the method in the above text, the content is not repeatedly described herein.

In some preferred embodiments of the invention, the content of said carrier is within the range of 30-70wt%, more preferably within the range of 30-50wt%, the content of said metal component calculated in terms of oxide is within the range of 30-70wt%, more preferably 50-70wt%, based on the total mass of the regenerated catalyst. When the contents of said carrier and said metal component are within the above preferred component content ranges, the regenerated catalyst has a degree of acidity or alkalinity which can provide not only the protonic acid necessary for the desorption process, but also provide the necessary basic group, it is helpful for expediting the desorption reaction.

In the present invention, the content of each component in the regenerated catalyst is obtained by the XPS test.

The invention has wider selection range for the specific types of the metal components, all the metals with Lewis acid characteristics can be used in the invention. In some preferred embodiments of the present invention, the metal component is selected from transition metal elements and/or Group IIIA elements, more preferably at least one selected from the group consisting of Fe, Mn, Co, Ni, Cu, Zn, La, Ce, Zr, Mo, W, Au, Ag, Ti, Pt, Rh, Ru, Re, Al, Ga and In; in order to further improve the catalytic activity of the regenerated catalyst and increase the $CO_2$ desorption rate, the metal component is preferably at least one selected from the group consisting of Al, Fe, Co, Ni and Ti.

In the present invention, the metal component is at least partially present in the form of an oxide.

In some preferred embodiments of the invention, the regenerated catalyst has a suitable specific surface area, preferably the specific surface area of the regenerated catalyst is within the range of 30-100m$^2$/g, more preferably within the range of 45-80m$^2$/g. Under the preferable conditions, the regenerated catalyst has excellent dispersion effect, is beneficial to the exposure of more active sites and accelerates the reaction process.

In some preferred embodiments of the invention, the total pore volume of the regenerated catalyst is 0.06-0.2 mL/g, more preferably 0.1-0.15 mL/g. The abundant pore distribution exists in the regenerated catalyst, so that the mass transfer efficiency can be ensured, the regeneration efficiency can be improved, the mechanical strength is high, thus the service life of said catalyst is prolonged.

In some preferred embodiments of the invention, the ratio of the volume of pores having a pore diameter of 20 nm or below to the total pore volume of the regenerated catalyst is not smaller than 30%, more preferably within the range of 30-80%, further preferably within the range of 50-60%. Compared with the unsupported graphene aerogel, after the catalyst is prepared by loading the metal component, the volume content of the pores having a pore diameter of 20 nm or below is reduced, the reason may be that a part of the metal component is filled in the pores having a pore diameter of 20 nm or below in the graphene aerogel, so that the part of pores is reduced. Under such a circumstance, the metal component is anchored on the graphene aerogel, which is beneficial to exerting activity of the metal component, the cooperation of the metal component with a suitable amount of B acid is capable of improving the catalytic efficiency, thereby decreasing the desorption temperature and shortening the desorption time, and it is conducive to reducing the loss rate of the catalyst during the regeneration process of alcohol amine solution and prolonging the service life of said catalyst.

In the invention, specific surface area, pore volume and pore distribution of regenerated catalyst are measured by $N_2$ adsorption-desorption isotherm method.

According to a preferred embodiment of the present invention, a method for preparing the regenerated catalyst comprises the following steps:

S1: mixing a carrier with a solution of the soluble compound containing the metal component in the presence of ultrasonic waves to obtain a mixed solution;

S2: adding a precipitant into the mixed solution, carrying out the precipitation reaction, and then drying and roasting the reaction product;

Wherein the carrier comprises the graphene aerogel according the first aspect, and the metal component has Lewis acid characteristics.

According to the invention, the metal component can be loaded on the carrier through in-situ deposition by an impregnation-precipitation method, so that in the prepared regenerated catalyst, the metal component is bonded on the graphene aerogel through a chemical bond, the metal component and the carrier have a strong interaction, which is beneficial to enhancing the catalytic activity of the regenerated catalyst and improving the $CO_2$ desorption rate.

In some preferred embodiments of the invention, in step S1, the volume ratio of the solution of the soluble compound containing a metal component to the carrier is 0.1-4: 1, more preferably 0.5-2: 1.

In the present invention, the concentration of the solution of the soluble compound containing a metal component is selected from a wide range, in order to ensure uniform dispersion of the metal oxide and avoid plugging of the pores and channels, the concentration of the solution of the soluble compound containing a metal component is preferably within the range of 0.5-2 mol/L, further preferably within the range of 1-1.5 mol/L.

In some preferred embodiments of the invention, the frequency of ultrasonic wave is within the range of 10,000-100,000Hz, more preferably within the range of 30,000-50,000Hz; the mixing time is 1-3h, more preferably 1-1.5h. An use of the preferable mixing mode is conducive to the uniform mixing and sufficient contact of the carrier with the soluble compound containing a metal component, and improving the uniformity and dispersity of the metal component loaded on the carrier.

In the invention, the specific kinds of the soluble compounds containing the metal component are not particularly limited, the compounds may be selected from soluble organic or inorganic salts containing the metal component commonly used in the art, for example, at least one selected from the group consisting of nitrate, acetate, sulfate, and chloride containing the metal component.

The invention has a wider selection range for the specific types of the metal components, and all metals with Lewis acid characteristics can be used in the invention. In some preferred embodiments of the invention, the metal component is selected from transition metal elements and/or Group IIIA elements, preferably at least one selected from the group consisting of Fe, Mn, Co, Ni, Cu, Zn, La, Ce, Zr, Mo, W, Au, Ag, Ti, Pt, Rh, Ru, Re, Al, Ga and In. In order to further improve the catalytic activity of the regenerated catalyst and increase the $CO_2$ desorption rate, preferably, the metal component is at least one selected from the group consisting of Al, Fe, Co, Ni and Ti.

In some preferred embodiments of the present invention, in step S2, the pH of the precipitation reaction is adjusted by adding a precipitant, preferably, the pH of the precipitation reaction is within the range of 8-10, preferably within the range of 8-9.

In some preferred embodiments of the invention, the precipitant is added at a rate of 0.1-2 mL/min, preferably 0.5-1 mL/min, relative to 1L of the mixed solution. Controlling the addition rate of the precipitant within the preferred ranges described above, it facilitates the relatively uniform formation of precipitates by the metal ions.

The specific choice of the precipitant is not particularly limited in the invention, any conventional precipitant in the field may be used in the invention, for example, the precipitant may be ammonia water. The invention has a wide selection range of the concentration of the ammonia water, the concentration of ammonia water is preferably within the range of 22-28 wt%.

In the present invention, the specific modes and conditions for the drying in step S2 are not particularly limited, as long as the solvent in the product of the precipitation reaction can be removed. A solid-liquid separation operation can also be included before the drying process, the specific mode of the solid-liquid separation process is not particularly limited in the invention, it can be selected by those skilled in the art according to actual needs.

In some preferred embodiments of the present invention, the drying temperature in step S2 is within the range of 40-150°C, and the drying time is 8-24h; more preferably, the drying temperature is within the range of 80-120°C, and the drying time is 8-12h.

In some preferred embodiments of the invention, the roasting temperature in step S2 is within the range of 300-1,000°C, more preferably within the range of 300-600°C; the roasting time is 1-10h, more preferably 4-8h.

The third aspect of the present invention provides an use of the regenerated catalyst according to the second aspect in the regeneration of the $CO_2$-rich amine solution.

The regenerated catalyst can be used as a $CO_2$ desorption catalyst in the regeneration of $CO_2$-rich amine solution, wherein the $CO_2$-rich amine solution refers to an organic amine solution absorbed with $CO_2$, and the organic amine solution may be any organic amine or composite organic amine solution known in the art for $CO_2$ absorption, including but not limited to one of monoethanolamine, diethanolamine, methyldiethanolamine and triethanolamine of a combination thereof.

The graphene aerogel in the regenerated catalyst has a suitable B acid content, suitable pore amount and pore structure, under the synergistic effect with the metal components, when the regenerated catalyst is used in the regeneration process of the $CO_2$-rich amine solution, it can effectively promote the desorption reaction process, which is beneficial to catalyzing desorption of $CO_2$, reducing the initial temperature and finish temperature of desorption, increasing the desorption rate, shortening the desorption time, reducing the desorption energy consumption and increasing the desorption quantity, and the regenerated catalyst has a higher mechanical strength, thereby prolonging the cycle service life.

The fourth aspect of the invention provides a method for regenerating a $CO_2$-rich amine solution, the $CO_2$-rich amine solution contacts with a catalyst under the regeneration condition to carry out the desorption of $CO_2$;

Wherein the catalyst is the regenerated catalyst according to the second aspect.

In some preferred embodiments of the present invention, the catalyst is used in an amount of 1-10wt%, more preferably 1-3wt%, based on the total mass of the $CO_2$-rich amine solution.

When the conventional regenerated catalyst in the prior art is used for regeneration of $CO_2$-rich amine solution, the preparation cost of the regenerated catalyst is high, the required initial desorption temperature is high, and the reaction time is long, such that the energy consumption in the desorption process is high. The regenerated catalyst provided by the invention adopts graphene aerogel as a carrier, and is beneficial to promoting the desorption reaction to proceed to the positive direction under the synergistic action with metal components, greatly reducing the desorption temperature and the desorption energy consumption, and the loss rate of said catalyst in the repeated regeneration process is low, thereby improving the economical efficiency of the regeneration of said $CO_2$-rich amine solution.

The possible reason may be that the graphene aerogel has a suitable amount of protonic acid (B acid), a suitable pore amount and pore structure, so that the graphene aerogel is beneficial to catalyzing desorption of $CO_2$, reducing initial temperature and finish temperature of desorption, increasing the desorption rate, thereby decreasing the desorption energy consumption; after the metal component is further loaded on the graphene aerogel, it provides protonic acid for a carbon dioxide desorption process and a certain weak alkalinity, thereby promoting the fracture of MEA-COO- bond and deprotonation processes of MEAH+ in the $CO_2$-rich amine solution; meanwhile, the suitable pore amount and pore structure of the graphene aerogel are also beneficial to improving the mechanical strength of the catalyst, and anchoring of metal components in the preparation process of the catalyst, so that the loss of said catalyst is reduced, the service life of the regenerated catalyst is prolonged, and the industrial application is facilitated.

In some preferred embodiments of the invention, the initial temperature of the $CO_2$ desorption is within the range of 10-70°C, preferably within the range of 30-50°C. According to the present invention, the accumulated volume flow of desorbed $CO_2$ is recorded during the regeneration process, when the accumulated volume flow is constant, it indicates that the regeneration process is terminated, the initial temperature refers to the temperature at which the desorption of $CO_2$ starts, and the time from the start of desorption to the end of regeneration is recorded as the regeneration time.

According to the invention, the regeneration of the $CO_2$-rich amine solution has a lower initial temperature and a higher desorption rate, thereby further reducing the regeneration energy consumption of the $CO_2$-rich amine solution, and the regenerated catalyst has a low loss rate, which is beneficial to the industrial application of the chemical absorption method.

In some preferred embodiments of the present invention, in order to fully contact the $CO_2$-rich amine solution with the catalyst and further increase the desorption rate, the contact of the $CO_2$-rich amine solution with the catalyst is performed under stirring conditions, preferably at a stirring rate of 100-200 rpm.

In the invention, the $CO_2$-rich amine solution refers to an organic amine solution absorbed with $CO_2$, the organic amine solution may be any organic amine or composite organic amine solution for absorbing $CO_2$ known in the field, and the selection range of the organic amine solution is described in the preceding text, the content is not repeatedly described herein.

The present invention will be described in detail below with reference to examples.

The graphene used in the following preparation examples and examples was a commercially available product from Qingdao Huatai Lubrication Sealing Technology Co., Ltd., and the composite amine solution with a model MA-2 was purchased from Sinopec Nanjing Chemical Research Institute.

Unless otherwise specified, the raw materials in use were all commercially available.

The test methods involved in the examples were as follows:

(1) The contents of B acid or L acid were measured with a pyridine infrared method, the specific test method was as follows: 0.0089g of a sample to be detected was pressed into a self-supporting sheet with a diameter of 1.3 cm, the self-supporting sheet was placed in an in-situ pool, the sample was vacuumized at 300°C, cooled to room temperature to measure a background infrared spectrogram, the saturated pyridine steam was adsorbed until the adsorption of said sample was saturated, the spectrogram was recorded, after purging was performed with helium gas for 1h, vacuumizing and a programmed temperature rise desorption (0-350°C) were carried out, the spectrogram was recorded per a temperature interval of 20°C, the standard positions of B acid and L acid in the obtained pyridine infrared spectrogram were recorded at 1540 cm$^{-1}$ and 1450 cm$^{-1}$ respectively, the peaks at corresponding positions in the spectrogram were integrated, the spectrogram peak area normalization was performed, the relative acid amount was then calculated according to the following formula:

$$C = \frac{K_{L/B} \times I_{L/B} \times R^2}{4W} \times 1000$$ Wherein C denoted an acid amount, with an unit of mmol/g; $K_{L/B}$ denoted the absorption coefficient of L acid or B acid, which was 1.42 and 1.88 respectively, i.e., $K_L$ denoted the absorption coefficient of L acid, it was 1.42, $K_B$ denoted the absorption coefficient of B acid and it was 1.88, and the unit was mmol/cm; $I_{L/B}$ denoted the peak area of L acid or B acid, and the unit was $cm^{-1}$; R denoted a diameter of the tablet, with an unit of cm; W denoted the tablet weight in an unit of g.

(2) Measurements of specific surface area, pore volume and pore diameter distribution test.

The specific surface area, pore volume and pore diameter distribution were measured by the $N_2$ adsorption-desorption isotherm method.

(3) The X-ray photoelectron spectroscopy (XPS) analysis was tested on the ESCALAB 250XI model X-ray photoelectron spectrometer manufactured by Thermo Fisher Scientific Inc. in the United States of America (USA) under the test conditions comprising: the excitation source was A1 K$\alpha$ rays, and the scanning range was 0-1200eV.

(4) Scanning Electron Microscope (SEM) testing

The Scanning Electron microscopy analysis was performed on the model S-4800 scanning electron microscope manufactured by Hitachi Corporation in Japan, with a test voltage of 1-10kV and a magnification of 0.5-50k.

(5) Transmission Electron Microscope (TEM) testing

Transmission electron microscopy analysis was performed on the model TECNAI G2 F20 emission transmission electron microscope manufactured by the FEI Incorporation in the USA, with a test voltage of 100-500kV and a magnification of 1-5,000k.

(6) Compression strength test

The graphene aerogel to be tested was pressed into a cylindrical test piece with a height of 10mm and a diameter of 10 mm, the prepared test piece was soaked in physiological saline at 37°C, then heated in a thermostatic water bath for 24 hours, the individual diameter of each test piece was accurately measured to a precision of 0.02 mm by using a vernier caliper, the test piece was vertically pressurized on an electronic universal testing machine by adopting a preload of 5N and a loading speed of 1 mm/min, and the maximum load value when the test piece ruptured was recorded. The compression strength P=F/S, wherein F denoted the maximum load value (N) upon fracture of the test piece, S denoted the base area ($mm^2$) of the cylindrical test piece, the obtained compression strength unit was MPa, which was converted into the unit of kPa.

The following preparation examples were provided to illustrate the preparation of graphene aerogel.

Preparation Example 1

(1) Preparation of graphene oxide: 0.6g of graphene, 3g of potassium permanganate, 30mL of concentrated sulfuric acid (98wt%), the reaction kettle shell and the tetrafluoroethylene lining were placed in a refrigerator at 4°C and were refrigerated for 8h. The refrigerated graphite, potassium permanganate and concentrated sulfuric acid were poured into the reaction kettle gut, and the reaction kettle was quickly covered, and the kettle cover was screwed down. The reaction kettle was placed in an ice bath, the temperature was controlled to be 4°C, the reaction kettle was kept stand still for 1.5 hours, the reaction kettle was placed into an oven with a temperature of 80°C for carrying out the reaction for 1.5 hours, the reaction kettle was subsequently taken out and cooled to the room temperature. The reaction product was slowly poured into deionized water, stirred and diluted, wherein the volume of water was 5 times of that of concentrated sulfuric acid. 5mL of hydrogen peroxide was dropwise added while stirring until the mixed solution was yellow brown or golden yellow. After 24 hours of stand still, the supernatant was discarded and the bottom sediment was centrifuged. The centrifuged product was washed with 5wt% hydrochloric acid solution and deionized water for 5 times respectively until the pH value was more than 5, the product was transferred to a centrifuge, subjected to centrifugation at 1,000rpm for 15 minutes, and the supernatant was poured out. The middle and lower layer samples were poured into a beaker, diluted with water and washed, then centrifuged, the process was repeated 4 times until the pH value was more than 5. After completion of the washing process, the middle and lower layer slurry was transferred into a lightproof container, which was stored in a refrigerator at 4°C.

(2) The prepared graphene oxide slurry was measured with a dropper, diluted by adding water to obtain a GO slurry having a concentration of 2mg/mL, the GO slurry and ethylenediamine were mixed according to the mass ratio of ethylenediamine: graphene oxide being 0.004: 1, stirred by ultrasonic wave, poured into a glass bottle, and heated at 95°C for 6h for chemical reduction. The glass bottle was cooled to room temperature, the solid in the kettle was taken out to obtain the graphene hydrogel GH.

(3) The prepared GH was soaked into 150mL of an aqueous ethanol solution with a concentration of 20% V/V, the GH was transferred into a centrifugal tube, which was put into a freezing chamber of a refrigerator, and kept at the temperature of about -20°C for 1h. The frozen GH was put into a freeze dryer, the temperature was set to -90°C, subjected to vacuumizing, and keeping the temperature for 24h. The graphene aerogel intermediate product was obtained.

(4) The graphene aerogel intermediate product was dissolved in an equivoluminal dilute nitric acid solution (the concentration was 8 mol/L), heated to 80°C, stirred and carried out the reaction for 2 hours, after the reaction was finished, the graphene was taken out, washed with clear water till the pH value was neutral, the graphene was placed in an oven with a temperature of 100°C and subjected to drying for 12 hours. The graphene aerogel A1 was obtained.

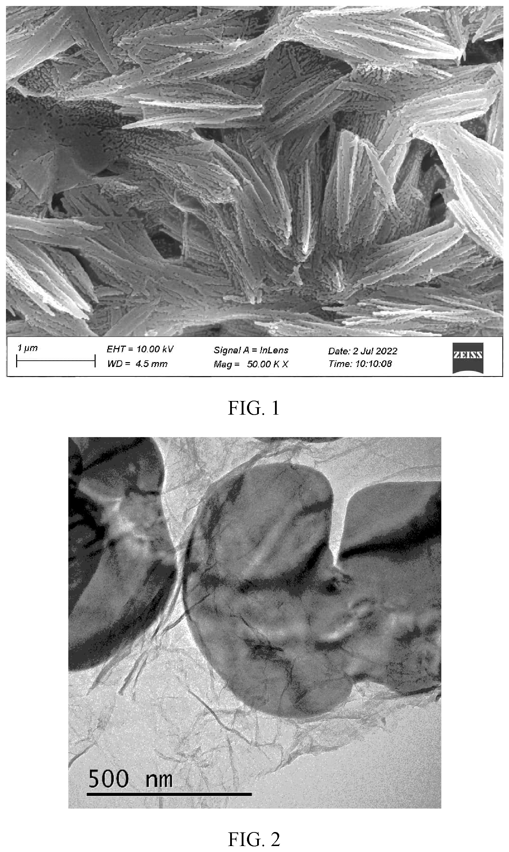

The surface morphology of graphene aerogel A1 was observed with a Scanning Electron Microscope (SEM), as shown in FIG. 1, the graphene aerogel had a three-dimensional porous network structure formed by stacking the two-dimensional graphene sheets, the dimensions of sheet layers were relatively uniform and the stacking was dense, more connections were formed among the sheets, abundant pores were distributed among the sheet layers. The average sheet length was 2.5μm and the average sheet thickness was 50 nm.

The internal structure of the graphene aerogel A1 was characterized by a Transmission Electron Microscope (TEM), as shown in FIG. 2, a network structure was formed inside the graphene aerogel, so that the graphene aerogel had good dispersibility and was beneficial to the transfer of media.

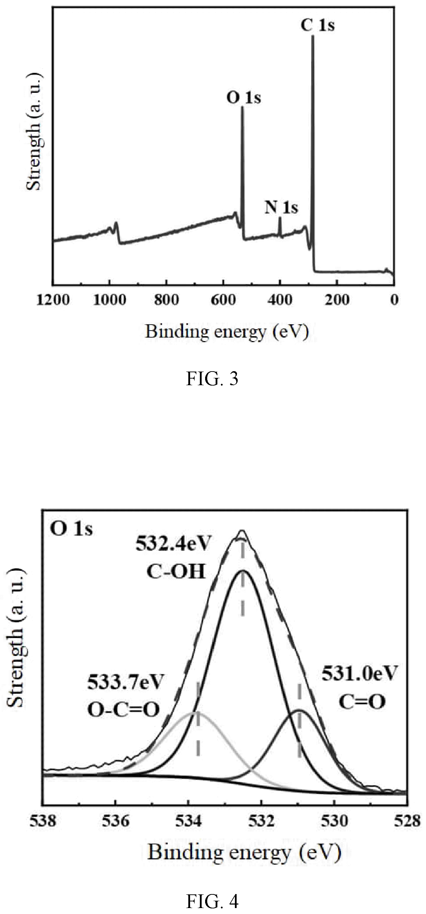

The chemical components of graphene aerogel A1 were characterized by X-ray photoelectron spectroscopy (XPS), as shown in FIG. 3, which demonstrated that the prepared graphene aerogel included C element, N element and O element, and the molar ratio of C element, O element and N element was determined to be about 25: 6: 1 based on the areas of the corresponding peaks in the X-ray photoelectron spectroscopy.

As shown in FIG. 4, the O1s spectrum in the X-ray photoelectron spectrogram of graphene aerogel demonstrated that the oxygen species in the graphene aerogel included hydroxyl oxygen, carbonyl oxygen and carboxyl oxygen. The molar ratio of hydroxyl oxygen, carbonyl oxygen and carboxyl oxygen were determined to be 4: 1.5: 1 based on the peak areas of the split peak.

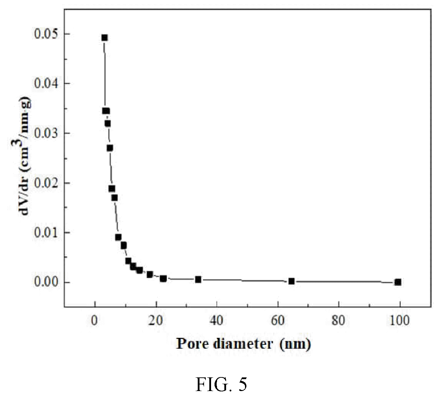

The specific surface area, the total pore volume and the pore diameter distribution of graphene aerogel A1 were tested by the $N_2$ adsorption-desorption isotherm, as shown in FIG. 5, the pore diameter distribution was concentrated below 20 nm.

The B acid content of graphene aerogel A1 was measured by the pyridine infrared method, and the compression strength of graphene aerogel A1 was measured by an electronic universal tester, the test results were shown in Table 1.

Preparation Example 2

(1) Preparation of graphene oxide: 0.6g of graphene, 4.0g of potassium permanganate, 40mL of concentrated sulfuric acid (98wt%), the reaction kettle shell and the tetrafluoroethylene lining were placed in a refrigerator at 4°C and were refrigerated for 12h. The refrigerated graphite, potassium permanganate and concentrated sulfuric acid were poured into the reaction kettle gut, and the reaction kettle was quickly covered, and the kettle cover was screwed down. The reaction kettle was placed in an ice bath, the temperature was controlled to be 4°C, the reaction kettle was kept stand still for 3 hours, the reaction kettle was placed into an oven with a temperature of 80°C for carrying out the reaction for 3 hours, the reaction kettle was subsequently taken out and cooled to the room temperature. The reaction product was slowly poured into deionized water, stirred and diluted, wherein the volume of water was 5 times of that of concentrated sulfuric acid. 5mL of hydrogen peroxide was dropwise added while stirring until the mixed solution was yellow brown or golden yellow. After 24 hours of stand still, the supernatant was discarded and the bottom sediment was centrifuged. The centrifuged product was washed with 5% hydrochloric acid solution and deionized water for 5 times respectively until the pH value was more than 5, the product was transferred to a centrifuge, subjected to centrifugation at 1,000rpm for 15 minutes, and the supernatant was poured out. The middle and lower layer samples were poured into a beaker, diluted with water and washed, then centrifuged, the process was repeated 4 times until the pH value was more than 5. After completion of the washing process, the middle and lower layer slurry was transferred into a lightproof container, which was stored in a refrigerator at 4°C.

(2) The prepared graphene oxide slurry was measured with a dropper, diluted by adding water to obtain a GO slurry having a concentration of 2mg/mL, the GO slurry and ethylenediamine were mixed according to the mass ratio of ethylenediamine: graphene oxide being 1: 1, stirred by ultrasonic wave, poured into a glass bottle, and heated at 90°C for 8h for chemical reduction. The glass bottle was cooled to room temperature, the solid in the kettle was taken out to obtain the graphene hydrogel GH.

(3) The prepared GH was soaked into 150mL of an aqueous ethanol solution with a concentration of 20% V/V, the GH was transferred into a centrifugal tube, which was put into a freezing chamber of a refrigerator, and kept at the temperature of about -25°C for 1h. The frozen GH was put into a freeze dryer, the temperature was set to -60°C, subjected to vacuumizing, and keeping the temperature for 20h. The graphene aerogel intermediate product was obtained.

(4) The graphene aerogel intermediate product was dissolved in an equivoluminal dilute nitric acid solution (the concentration was 6 mol/L), heated to 70°C, stirred and carried out the reaction for 4 hours, after the reaction was finished, the graphene was taken out, washed with clear water till the pH value was neutral, the graphene was placed in an oven with a temperature of 100°C and subjected to drying for 12 hours. The graphene aerogel A2 was obtained.

The surface morphology of graphene aerogel A2 observed with a Scanning Electron Microscope (SEM) was similar with that in FIG. 1.

The chemical components of graphene aerogel A2 were characterized by X-ray photoelectron spectroscopy (XPS), the molar ratio of C element, O element and N element was determined was 15: 12: 2.

The O1s spectrum in the X-ray photoelectron spectrogram of graphene aerogel demonstrated that the molar ratio of hydroxyl oxygen, carbonyl oxygen and carboxyl oxygen were 3: 1.5: 1.

The specific surface area, the total pore volume and the pore diameter distribution of graphene aerogel A2 were tested by the $N_2$ adsorption-desorption isotherm; the B acid content of graphene aerogel A2 was measured by the pyridine infrared method, and the compression strength of graphene aerogel A2 was measured by an electronic universal tester, the test results were shown in Table 1.

Preparation Example 3

(1) The preparation of graphene oxide was carried out according to the method in Preparation Example 1.

(2) The prepared graphene oxide slurry was measured with a dropper, diluted by adding water to obtain a GO slurry having a concentration of 2 mg/mL, the GO slurry and ethylenediamine were mixed according to the mass ratio of ethylenediamine: graphene oxide being 0.01: 1, stirred by ultrasonic wave, poured into a glass bottle, and heated at 80°C for 10h for chemical reduction. The glass bottle was cooled to room temperature, the solid in the kettle was taken out to obtain the graphene hydrogel GH.

(3) The prepared GH was soaked into 150mL of an aqueous ethanol solution with a concentration of 20% V/V, the GH was transferred into a centrifugal tube, which was put into a freezing chamber of a refrigerator, and kept at the temperature of about -15°C for 1h. The frozen GH was put into a freeze dryer, the temperature was set to -50°C, subjected to vacuumizing, and keeping the temperature for 24h. The graphene aerogel intermediate product was obtained.

(4) The graphene aerogel intermediate product was dissolved in an equivoluminal dilute nitric acid solution (the concentration was 5 mol/L), heated to 60°C, stirred and carried out the reaction for 2 hours, after the reaction was finished, the graphene was taken out, washed with clear water till the pH value was neutral, the graphene was placed in an oven with a temperature of 120°C and subjected to drying for 16 hours. The graphene aerogel A3 was obtained.

The surface morphology of graphene aerogel A3 observed with a Scanning Electron Microscope (SEM) was similar with that in FIG. 1.

The chemical components of graphene aerogel A3 were characterized by X-ray photoelectron spectroscopy (XPS), the molar ratio of C element, O element and N element was determined was 25: 15: 2. The O1s spectrum in the X-ray photoelectron spectrogram of graphene aerogel demonstrated that the molar ratio of hydroxyl oxygen, carbonyl oxygen and carboxyl oxygen were 3: 1: 1.

The specific surface area, the total pore volume and the pore diameter distribution of graphene aerogel A3 were tested by the $N_2$ adsorption-desorption isotherm; the B acid content of graphene aerogel A3 was measured by the pyridine infrared method, and the compression strength of graphene aerogel A3 was measured by an electronic universal tester, the test results were shown in Table 1.

Preparation Example 4

The graphene aerogel was prepared according to the method of Preparation Example 1, except that the step (2) included: the prepared graphene oxide slurry was measured with a dropper, diluted by adding water to obtain a GO slurry having a concentration of 2 mg/mL, the GO slurry and ethylenediamine were mixed according to the mass ratio of ethylenediamine: graphene oxide being 0.001: 1, stirred by ultrasonic wave, poured into a glass bottle, and heated at 90°C for 6h for chemical reduction. The glass bottle was cooled to room temperature, the solid in the kettle was taken out to obtain the graphene hydrogel GH.

The obtained graphene aerogel was denoted as A4.

The surface morphology of graphene aerogel A4 observed with a Scanning Electron Microscope (SEM) was similar with that in FIG. 1.

The chemical components of graphene aerogel A4 were characterized by X-ray photoelectron spectroscopy (XPS), the molar ratio of C element, O element and N element was determined was 45: 5: 1. The O1s spectrum in the X-ray photoelectron spectrogram of graphene aerogel determined that the molar ratio of hydroxyl oxygen, carbonyl oxygen and carboxyl oxygen was 7.5: 1.5: 1.

The specific surface area, the total pore volume and the pore diameter distribution of graphene aerogel A4 were tested by the $N_2$ adsorption-desorption isotherm; the B acid content of graphene aerogel A4 was measured by the pyridine infrared method, and the compression strength of graphene aerogel A4 was measured by an electronic universal tester, the test results were shown in Table 1.

Preparation Example 5

The graphene aerogel was prepared according to the method of Preparation Example 1, except that an equal mass of ascorbic acid was used for replacing ethylenediamine. The graphene aerogel A5 was obtained.

The surface morphology of graphene aerogel A5 observed with a Scanning Electron Microscope (SEM) was similar with that in FIG. 1.

The chemical components of graphene aerogel A5 were characterized by X-ray photoelectron spectroscopy (XPS), the molar ratio of C element, O element and N element was determined was 40: 3. The O1s spectrum in the X-ray photoelectron spectrogram of graphene aerogel determined that the molar ratio of hydroxyl oxygen, carbonyl oxygen and carboxyl oxygen was 10: 2: 1.

The specific surface area, the total pore volume and the pore diameter distribution of graphene aerogel A5 were tested by the $N_2$ adsorption-desorption isotherm; the B acid content of graphene aerogel A5 was measured by the pyridine infrared method, and the compression strength of graphene aerogel A5 was measured by an electronic universal tester, the test results were shown in Table 1.

Preparation Example 6

The graphene aerogel was prepared according to the method of Preparation Example 1, except that step (4) included: the graphene aerogel intermediate product was dissolved in an equivoluminal dilute nitric acid solution (the concentration was 4 mol/L), heated to 80°C, stirred and carried out the reaction for 2 hours, after the reaction was finished, the graphene was taken out, washed with clear water till the pH value was neutral, the graphene was placed in an oven with a temperature of 100°C and subjected to drying for 12 hours. The graphene aerogel A6 was obtained.

The surface morphology of graphene aerogel A6 observed with a Scanning Electron Microscope (SEM) was similar with that in FIG. 1.

The chemical components of graphene aerogel A6 were characterized by X-ray photoelectron spectroscopy (XPS), the molar ratio of C element, O element and N element was determined was 30: 5: 0.3. The O1s spectrum in the X-ray photoelectron spectrogram of graphene aerogel determined that the molar ratio of hydroxyl oxygen, carbonyl oxygen and carboxyl oxygen was 6: 1.5: 1. The specific surface area, the total pore volume and the pore diameter distribution of graphene aerogel A6 were tested by the $N_2$ adsorption-desorption isotherm; the B acid content of graphene aerogel A6 was measured by the pyridine infrared method, and the compression strength of graphene aerogel A6 was measured by an electronic universal tester, the test results were shown in Table 1.

Preparation Example 7

The graphene aerogel was prepared according to the method of Preparation Example 1, except that step (4) included: the graphene aerogel intermediate product was dissolved in an equivoluminal dilute nitric acid solution (the concentration was 1 mol/L), heated to 60°C, stirred and carried out the reaction for 2 hours, after the reaction was finished, the graphene was taken out, washed with clear water till the pH value was neutral, the graphene was placed in an oven with a temperature of 100°C and subjected to drying for 12 hours. The graphene aerogel A7 was obtained.

The surface morphology of graphene aerogel A7 observed with a Scanning Electron Microscope (SEM) was similar with that in FIG. 1.

The chemical components of graphene aerogel A7 were characterized by X-ray photoelectron spectroscopy (XPS), the molar ratio of C element, O element and N element was 35: 4: 0.3. The O1s spectrum in the X-ray photoelectron spectrogram of graphene aerogel determined that the molar ratio of hydroxyl oxygen, carbonyl oxygen and carboxyl oxygen was 6.5: 1: 0.5. The specific surface area, the total pore volume and the pore diameter distribution of graphene aerogel A7 were tested by the $N_2$ adsorption-desorption isotherm; the B acid content of graphene aerogel A7 was measured by the pyridine infrared method, and the compression strength of graphene aerogel A7 was measured by an electronic universal tester, the test results were shown in Table 1.

Comparative Preparation Example 1

The graphene aerogel intermediate product obtained in step (3) of preparation example 1 was denoted as the graphene aerogel DA 1.

The surface morphology of graphene aerogel DA1 was observed to be a porous structure composed of graphene sheets through a Scanning Electron Microscope (SEM).

The chemical components of graphene aerogel DA1 were characterized by X-ray photoelectron spectroscopy (XPS), the molar ratio of C element, N element and O element was determined was 25: 6: 1. It was determined by the peak areas of the O1s spectrum that the graphene aerogel only included hydroxyl group.

The specific surface area, the total pore volume and the pore diameter distribution of graphene aerogel DA1 were tested by the $N_2$ adsorption-desorption isotherm; the B acid content of graphene aerogel DA1 was measured by the pyridine infrared method, and the compression strength of graphene aerogel DA1 was measured by an electronic universal tester, the test results were shown in Table 1.

Comparative Preparation Example 2

The graphene aerogel was prepared according to the method of Preparation Example 1, except that step (3) included: the prepared GH was soaked into 150 mL of an aqueous ethanol solution with a concentration of 20% V/V, the GH was transferred into a centrifugal tube, which was put into a freezing chamber of a refrigerator, and kept at the temperature of about -10°C for 1h. The frozen GH was put into a freeze dryer, the temperature was set to -30°C, subjected to vacuumizing, and keeping the temperature for 24h. The graphene aerogel intermediate product was obtained.

The acid activation was then carried out according to the method of Preparation Example 1, the graphene aerogel DA2 was obtained. The specific surface area, the total pore volume and the pore diameter distribution of graphene aerogel DA2 were tested by the $N_2$ adsorption-desorption isotherm; the B acid content of graphene aerogel DA2 was measured by the pyridine infrared method, and the compression strength of graphene aerogel DA2 was measured by an electronic universal tester, the test results were shown in Table 1.

Table 1

| Sample No. | B acid content (mmol/g) | Specific surface area ($m^2$/g) | Total pore volume (mL/g) | The ratio of the volume of pores having a pore diameter of 20 nm or below to the total pore volume (%) | Compression strength (kPa) |
|---|---|---|---|---|---|
| A1 | 0.03 | 110 | 0.2 | 80 | 50 |
| A2 | 0.02 | 100 | 0.15 | 75 | 45 |
| A3 | 0.017 | 110 | 0.2 | 78 | 50 |
| A4 | 0.015 | 50 | 0.1 | 75 | 30 |
| A5 | 0.02 | 40 | 0.05 | 50 | 20 |
| A6 | 0.01 | 100 | 0.19 | 76 | 45 |
| A7 | 0.001 | 90 | 0.17 | 72 | 40 |
| DA1 | 0.0001 | 83 | 0.15 | 70 | 42 |
| DA2 | 0.021 | 46 | 0.3 | 40 | 10 |

The following examples served to illustrate the preparation of a regenerated catalyst.

Example 1

S1: a certain volume of aluminum nitrate solution (with the concentration of 1 mol/L) and the graphene aerogel A1 were placed in the ultrasonic wave, the volume ratio of said aluminum nitrate solution to said graphene aerogel was 1: 1, the ultrasonic treatment was performed at a frequency of 40,000Hz for 1h, the two materials were sufficiently and uniformly blended to obtain a mixed solution;

S2: 25wt% of ammonia water was added into the mixed solution and continuously stirred until the pH value was 8-9, wherein the addition rate of the ammonia water was 0.5 mL/min relative to 1L of the mixed solution. The product was filtered and then placed in a drying oven, subjected to drying at 110°C for 8h, the product was subsequently placed in a muffle furnace for calcination at 400°C for 6h to obtain the regenerated catalyst S1. The content of the carrier was 40wt%, and the content of alumina was 60wt%, based on the total mass of the regenerated catalyst.

The surface morphology of regenerated catalyst S1 was observed with a Scanning Electron Microscope (SEM), the loaded catalyst still had a three-dimensional porous network structure formed by stacking two-dimensional graphene sheets, and the pore channel structure on the surface of the graphene sheet layer was kept relatively complete. The catalyst retained the looseness of graphene aerogel, and aerogel was not agglomerated after the loading process, it indicated that the catalyst still had good dispersibility, which was beneficial to the transfer of media.

The specific surface area, the total pore volume and the pore diameter distribution of regenerated catalyst S1 were tested by the $N_2$ adsorption-desorption isotherm; the contents of B acid and L acid of regenerated catalyst S1 were measured by the pyridine infrared method, the test results were shown in Table 2.

Example 2

S1: a certain volume of ferric nitrate solution (with the concentration of 1 mol/L) and the graphene aerogel A2 were placed in the ultrasonic wave, the volume ratio of said aluminum nitrate solution to said graphene aerogel was 1: 1, the ultrasonic treatment was performed at a frequency of 40,000Hz for 10h, the two materials were sufficiently and uniformly blended to obtain a mixed solution;

S2: 25wt% of ammonia water was added into the mixed solution and continuously stirred until the pH value was 8-9, wherein the addition rate of the ammonia water was 1mL/min relative to 1L of the mixed solution. The product was filtered and then placed in a drying oven, subjected to drying at 100°C for 12h, the product was subsequently placed in a muffle furnace for calcination at 550°C for 6h to obtain the regenerated catalyst S2. The content of the carrier was 31wt%, and the content of ferroferric oxide was 69wt%, based on the total mass of the regenerated catalyst.

The specific surface area, the total pore volume and the pore diameter distribution of regenerated catalyst S2 were tested by the $N_2$ adsorption-desorption isotherm; the contents of B acid and L acid of regenerated catalyst S2 were measured by the pyridine infrared method, the test results were shown in Table 2.

Example 3

S1: a certain volume of cobalt nitrate solution (with the concentration of 1 mol/L) and the graphene aerogel A3 were placed in the ultrasonic wave, the volume ratio of said aluminum nitrate solution to said graphene aerogel was 1: 1, the ultrasonic treatment was performed at a frequency of 40,000Hz for 1h, the two materials were sufficiently and uniformly blended to obtain a mixed solution;

S2: 25wt% of ammonia water was added into the mixed solution and continuously stirred until the pH value was 8-9, wherein the addition rate of the ammonia water was 0.5mL/min relative to 1L of the mixed solution. The product was filtered and then placed in a drying oven, subjected to drying at 110°C for 8h, the product was subsequently placed in a muffle furnace for calcination at 400°C for 6h to obtain the regenerated catalyst S3. The content of the carrier was 48wt%, and the content of cobalt oxide was 52wt%, based on the total mass of the regenerated catalyst. The specific surface area, the total pore volume and the pore diameter distribution of regenerated catalyst S3 were tested by the $N_2$ adsorption-desorption isotherm; the contents of B acid and L acid of regenerated catalyst S3 were measured by the pyridine infrared method, the test results were shown in Table 2.

Example 4

S1: a certain volume of ferric nitrate solution (with the concentration of 1.0 mol/L) and the graphene aerogel A2 were placed in the ultrasonic wave, the volume ratio of said aluminum nitrate solution to said graphene aerogel was 1: 1, the ultrasonic treatment was performed at a frequency of 40,000Hz for 10h, the two materials were sufficiently and uniformly blended to obtain a mixed solution;

S2: the product was filtered and then placed in a drying oven, subjected to drying at 110°C for 12h, the product was subsequently placed in a muffle furnace for calcination at 650°C for 4h to obtain the regenerated catalyst S4. The content of the carrier was 31wt%, and the content of ferric oxide was 69wt%, based on the total mass of the regenerated catalyst. When the precipitant was not introduced, a higher calcination temperature was required to ensure loading of the metal oxide, which may result in agglomeration of graphene aerogel, and reduced specific surface area and pore volume.

The specific surface area, the total pore volume and the pore diameter distribution of regenerated catalyst S4 were tested by the $N_2$ adsorption-desorption isotherm; the contents of B acid and L acid of regenerated catalyst S4 were measured by the pyridine infrared method, the test results were shown in Table 2.

Example 5

The regenerated catalyst was prepared according to the method in Example 1, except that the graphene aerogel A4 was used for replacing the graphene aerogel A1. The regenerated catalyst S5 was obtained.
The specific surface area, the total pore volume and the pore diameter distribution of regenerated catalyst S5 were tested by the $N_2$ adsorption-desorption isotherm; the contents of B acid and L acid of regenerated catalyst S5 were measured by the pyridine infrared method, the test results were shown in Table 2.

Example 6

The regenerated catalyst was prepared according to the method in Example 1, except that the graphene aerogel A5 was used for replacing the graphene aerogel A1. The regenerated catalyst S6 was obtained.
The specific surface area, the total pore volume and the pore diameter distribution of regenerated catalyst S6 were tested by the $N_2$ adsorption-desorption isotherm; the contents of B acid and L acid of regenerated catalyst S6 were measured by the pyridine infrared method, the test results were shown in Table 2.

Example 7

The regenerated catalyst was prepared according to the method in Example 1, except that the graphene aerogel A6 was used for replacing the graphene aerogel A1. The regenerated catalyst S7 was obtained.
The specific surface area, the total pore volume and the pore diameter distribution of regenerated catalyst S7 were tested by the $N_2$ adsorption-desorption isotherm; the contents of B acid and L acid of regenerated catalyst S7 were measured by the pyridine infrared method, the test results were shown in Table 2.

Example 8

The regenerated catalyst was prepared according to the method in Example 1, except that the graphene aerogel A7 was used for replacing the graphene aerogel A1. The regenerated catalyst S8 was obtained.
The specific surface area, the total pore volume and the pore diameter distribution of regenerated catalyst S8 were tested by the $N_2$ adsorption-desorption isotherm; the contents of B acid and L acid of regenerated catalyst S8 were measured by the pyridine infrared method, the test results were shown in Table 2.

Example 9

The regenerated catalyst was prepared according to the method in Example 1, except that the aluminum nitrate solution was changed to an equal concentration and volume of boric acid solution, the regenerated catalyst S9 was obtained.
The specific surface area, the total pore volume and the pore diameter distribution of regenerated catalyst S9 were tested by the $N_2$ adsorption-desorption isotherm; the contents of B acid and L acid of regenerated catalyst S9 were measured by the pyridine infrared method, the test results were shown in Table 2.

Comparative Example 1

The commercially available aluminum oxide and graphene aerogel A1 were mixed according to the mass ratio of aluminum oxide to graphene aerogel A1 of 2: 3, the two materials were subjected to physically grinding, and then placed in a muffle furnace and subjected to calcination at 400°C for 6 hours to obtain the regenerated catalyst DS1.

The specific surface area, the total pore volume and the pore diameter distribution of regenerated catalyst DS1 were tested by the $N_2$ adsorption-desorption isotherm; the contents of B acid and L acid of regenerated catalyst DS1 were measured by the pyridine infrared method, the test results were shown in Table 2.

Comparative Example 2

The regenerated catalyst was prepared according to the method in Example 1, except that an equal amount of HZSM-5 molecular sieve (commercially available catalyst from the Nankai University in China) for replacing the graphene aerogel A1, the regenerated catalyst DS2 was obtained.

The specific surface area, the total pore volume and the pore diameter distribution of regenerated catalyst DS2 were tested by the $N_2$ adsorption-desorption isotherm; the contents of B acid and L acid of regenerated catalyst DS2 were measured by the pyridine infrared method, the test results were shown in Table 2.

Comparative Example 3

The regenerated catalyst was prepared according to the method in Example 1, except that an equal amount of graphene aerogel DA1 was used for replacing the graphene aerogel A1. The regenerated catalyst DS3 was obtained.

The specific surface area, the total pore volume and the pore diameter distribution of regenerated catalyst DS3 were tested by the $N_2$ adsorption-desorption isotherm; the contents of B acid and L acid of regenerated catalyst DS3 were measured by the pyridine infrared method, the test results were shown in Table 2.

Comparative Example 4

The GO slurry obtained in Preparation Example 1, ethylenediamine and commercially available alumina were mixed, the mass ratio of ethylenediamine: the graphene oxide was 0.004: 1, the material were stirred by ultrasonic waves, and then subjected to the reaction in a drying oven at 95°C for 12 hours. The reaction product was frozen in a refrigerator at -18°C. After the freezing was complete, the sample was placed in a vacuum freeze dryer for performing the lyophilization process, the obtained solid product was denoted as DS4.

The specific surface area, the total pore volume and the pore diameter distribution of regenerated catalyst DS4 were tested by the $N_2$ adsorption-desorption isotherm; the contents of B acid and L acid of regenerated catalyst DS4 were measured by the pyridine infrared method, the test results were shown in Table 2.

Comparative Example 5

The regenerated catalyst was prepared according to the method in Example 1, except that an equal amount of graphene aerogel DA2 was used for replacing the graphene aerogel A1. The regenerated catalyst DS5 was obtained.

The specific surface area, the total pore volume and the pore diameter distribution of regenerated catalyst DS5 were tested by the $N_2$ adsorption-desorption isotherm; the contents of B acid and L acid of regenerated catalyst DSS were measured by the pyridine infrared method, the test results were shown in Table 2.

The physicochemical data of regenerated catalysts obtained in the aforementioned Examples and Comparative Examples were shown in Table 2.

Table 2

| Sample No. | B acid content (mmol/g) | Molar ratio of B acid to L acid | Specific surface area ($m^2/g$) | Total pore volume (mL/g) | The ratio of the volume of pores having a pore diameter of 20 nm or below to the total pore volume (%) |
|---|---|---|---|---|---|
| S1 | 0.016 | 0.15 | 70 | 0.15 | 58 |
| S2 | 0.011 | 0.14 | 67 | 0.14 | 54 |
| S3 | 0.013 | 0.13 | 65 | 0.13 | 54 |
| S4 | 0.012 | 0.3 | 57 | 0.1 | 51.5 |
| S5 | 0.008 | 0.08 | 45 | 0.06 | 48 |
| S6 | 0.013 | 0.12 | 38 | 0.02 | 32 |
| S7 | 0.009 | 0.1 | 63 | 0.14 | 53 |

(continued)

| Sample No. | B acid content (mmol/g) | Molar ratio of B acid to L acid | Specific surface area (m²/g) | Total pore volume (mL/g) | The ratio of the volume of pores having a pore diameter of 20 nm or below to the total pore volume (%) |
|---|---|---|---|---|---|
| S8 | 0.0006 | 0.006 | 64 | 0.12 | 54 |
| S9 | 0.019 | 0.4 | 89 | 0.18 | 58 |
| DS1 | 0.01 | 0.31 | 45 | 0.1 | 49 |
| DS2 | 0.13 | 0.89 | 230 | 0.1 | 92 |
| DS3 | 0.0001 | 0.001 | 60 | 0.13 | 53 |
| DS4 | 0.0001 | 0.001 | 52 | 0.09 | 49 |
| DS5 | 0.01 | 0.1 | 45 | 0.28 | 32 |

The regenerated catalysts prepared in the aforementioned Examples and Comparative Examples were subjected to the regeneration evaluation of the alcohol amine solution.

Preparation of $CO_2$-rich amine solution: a gas mixture of $N_2/CO_2$ according to a volume ratio of 85: 15 was introduced into the composite amine solution for 2 hours to obtain a $CO_2$-rich amine solution.

1% (mass ratio of $CO_2$-rich amine solution) of the regenerated catalyst was added into the $CO_2$-rich amine solution, the temperature was gradually increased, the stirring at a rotational speed of 200rpm was continuously implemented, a gas flowmeter was adopted to control and record the accumulated volume flow of desorbed $CO_2$, the temperature when the desorption started (initial temperature), finish temperature and regeneration time were recorded. The rich solution was sampled every 5 minutes, and the loading amounts of $CO_2$ in the composite amine solution at different times of desorption were measured by an acid-base titration method to calculate the desorption rate, the desorption quantity and the relative energy consumption, the results were shown in Table 3.

Desorption energy consumption (H) referred to the desorption energy consumption (kJ/mol) per unit mole of $CO_2$, it was defined as the ratio of the energy input rate and the $CO_2$ desorption rate, it was calculated based on the formula (1):

$$H = \frac{Energy\ input/Time}{CO_2\ desorption\ amoun/Time} = \frac{E}{n_{CO_2}} = \frac{kJ/h}{mol/h} = \frac{kJ}{mol} \qquad \text{formula (1),}$$

Wherein E denoted the electric quantity consumed by the $CO_2$ desorption in a certain time recorded by the electric energy meter, the unit was kW·h, and the electric quantity needed to be converted into kJ when in use.

The relative energy consumption (RH) was calculated according to the formula (2), wherein Hb (kJ/mol) denoted the desorption energy consumption during regeneration process of the solution in the blank control group, Hi (kJ/mol) denoted the desorption energy consumption during the process of catalyzing the $CO_2$ desorption by the regenerated catalyst to be tested,

$$RH = \frac{H_i}{H_b} \times 100\% \qquad \text{formula (2).}$$

The regeneration experiment of the alcohol amine solution for each regenerated catalyst was continuously repeated for 6 times, the regenerated catalyst after reaction was subjected to drying and weighing, the mass loss rate of the catalyst was calculated.

Loss rate (%) = (mass of fresh regenerated catalyst - mass of regenerated catalyst after 6 repetitions of regeneration) / mass of fresh regenerated catalyst ×100%.

Table 3

| Regenerated catalyst | Initial temperature (°C) | Regeneration time (min) | Finish temperature (°C) | Desorption quantity (mol) | Relative energy consumptio n (%) | Loss rate (wt%) |
|---|---|---|---|---|---|---|
| S1 | 43 | 60 | 78 | 0.96 | 61.6 | 1.2 |
| S2 | 45 | 60 | 75 | 0.96 | 61.2 | 1.5 |
| S3 | 45 | 62 | 75 | 0.93 | 62.1 | 1.3 |
| S4 | 51 | 65 | 82 | 0.92 | 64.8 | 1.5 |
| S5 | 53 | 62 | 89 | 0.91 | 66.1 | 5.6 |
| S6 | 54 | 63 | 84 | 0.90 | 69.0 | 8.2 |
| S7 | 52 | 65 | 80 | 0.90 | 65.7 | 1.6 |
| S8 | 54 | 67 | 82 | 0.89 | 67.0 | 2.3 |
| S9 | 56 | 70 | 91 | 0.89 | 68.1 | 1.2 |
| DS1 | 69 | 72 | 104 | 0.75 | 89.0 | 8.5 |
| DS2 | 60 | 65 | 101 | 0.90 | 69.8 | 12.3 |
| DS3 | 63 | 72 | 99 | 0.85 | 82.9 | 1.2 |
| DS4 | 75 | 76 | 113 | 0.80 | 83.7 | 9.5 |
| DS5 | 65 | 75 | 100 | 0.83 | 83.2 | 6.3 |
| Blank control | 95 | 60 | 125 | 0.7 | 100 | / |

As can be seen with reference to the results in Tables 1-3, when the regenerated catalyst prepared by using the graphene aerogel provided by the invention as a catalyst carrier is used for regeneration of alcohol amine solution, the $CO_2$ desorption effect can be effectively improved, the initiation temperature of desorption can be reduced, and the energy consumption during the regeneration process can be decreased.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

**Claims**

1. A graphene aerogel, is **characterized in that** the B acid content of the graphene aerogel is within the range of 0.001-0.05 mmol/g, the specific surface area of the graphene aerogel is within the range of 40-200 $m^2$/g, and the ratio of the volume of pores having a pore diameter of 20 nm or below to the total pore volume of the graphene aerogel is not smaller than 50%.

2. The graphene aerogel according to claim 1, wherein the B acid content of the graphene aerogel is within the range of 0.01-0.03 mmol/g; preferably, the specific surface area of the graphene aerogel is within the range of 100-120 $m^2$/g.

3. The graphene aerogel according to claim 1 or 2, wherein the total pore volume of the graphene aerogel is within the range of 0.01-0.5mL/g, preferably within the range of 0.1-0.3 mL/g;
preferably, the ratio of the volume of pores having a pore diameter of 20 nm or below to the total pore volume of the graphene aerogel is within the range of 55-90%, more preferably within the range of 70-80%.

4. The graphene aerogel according to any one of claims 1-3, wherein the graphene aerogel comprises C element, O element and N element, the molar ratio of said C element, said O element and said N element is (1-60): (5-30): (0.5-5); preferably (15-35): (10-20): (1-2);

preferably, the oxygen species in the graphene aerogel measured by the X-ray photoelectron spectroscopy comprise hydroxyl oxygen, carbonyl oxygen and carboxyl oxygen, the molar ratio of hydroxyl oxygen, carbonyl oxygen and carboxyl oxygen is (1-20): (0.1-5): (1-5), more preferably (1-5): (0.5-2): (1-2).

5. The graphene aerogel according to any one of claims 1-4, wherein the graphene aerogel has a three-dimensional porous network structure formed by stacking two-dimensional graphene sheets;

> preferably, the two-dimensional graphene sheet has an average sheet thickness within the range of 10-200 nm, more preferably within the range of 50-100 nm;
> preferably, the two-dimensional graphene sheet has an average sheet length within the range of 0.1-10 $\mu$m, more preferably within the range of 1-5 $\mu$m.

6. The graphene aerogel according to any one of claims 1-5, wherein the compression strength of said graphene aerogel is above 30kPa, preferably within the range of 40-50kPa.

7. A regenerated catalyst, is **characterized in that** the regenerated catalyst comprises a carrier and a metal component loaded on the carrier; the metal component has Lewis acid characteristics, and the carrier is the graphene aerogel according to any one of claims 1-6.

8. The regenerated catalyst according to claim 7, wherein the B acid content of said regenerated catalyst is within the range of 0.0005-0.02 mmol/g, more preferably within the range of 0.008-0.016 mmol/g; preferably, the molar ratio of B acid to L acid in said regenerated catalyst is 0.01-1: 1, more preferably 0.1-0.5: 1, further preferably 0.1-0.2: 1.

9. The regenerated catalyst according to claim 7 or 8, wherein the content of said carrier is within the range of 30-70wt%, preferably within the range of 30-50wt%, the content of said metal component calculated in terms of oxide is within the range of 30-70wt%, preferably 50-70wt%, based on the total mass of the regenerated catalyst.

10. The regenerated catalyst according to any one of claims 7-9, wherein the metal component is selected from transition metal elements and/or Group IIIA elements, preferably at least one selected from the group consisting of Fe, Mn, Co, Ni, Cu, Zn, La, Ce, Zr, Mo, W, Au, Ag, Ti, Pt, Rh, Ru, Re, Al, Ga and In, more preferably at least one selected from the group consisting of Al, Fe, Co, Ni and Ti.

11. The regenerated catalyst according to any one of claims 7-10, wherein the specific surface area of the regenerated catalyst is within the range of 30-100 m$^2$/g, preferably within the range of 45-80 m$^2$/g;

> preferably, the total pore volume of the regenerated catalyst is 0.06-0.2 mL/g, more preferably 0.1-0.15 mL/g;
> preferably, the ratio of the volume of pores having a pore diameter of 20 nm or below to the total pore volume of the regenerated catalyst is not smaller than 30%, more preferably within the range of 30-80%, further preferably within the range of 50-60%.

12. Use of the regenerated catalyst according to any one of claims 7-11 in the regeneration of $CO_2$-rich amine solution.

13. A method for regenerating a $CO_2$-rich amine solution, is **characterized in that** the $CO_2$-rich amine solution contacts with a catalyst under the regeneration condition to carry out the desorption of $CO_2$;

> wherein the catalyst is the regenerated catalyst according to any one of claims 7-11;
> preferably, the catalyst is used in an amount of 1-10wt%, more preferably 1-3wt%, based on the total mass of the $CO_2$-rich amine solution;
> preferably, the initial temperature for the desorption of $CO_2$ is within the range of 10-70°C, more preferably within the range of 30-50°C.

FIG. 1

FIG. 2

FIG. 3

FIG. 4

FIG. 5

## INTERNATIONAL SEARCH REPORT

| International application No. |
|---|
| **PCT/CN2023/143530** |

**A. CLASSIFICATION OF SUBJECT MATTER**

C01B32/182(2017.01)i; B01D53/14(2006.01)i

According to International Patent Classification (IPC) or to both national classification and IPC

**B. FIELDS SEARCHED**

Minimum documentation searched (classification system followed by classification symbols)

C01B32/-, B01D53/-

Documentation searched other than minimum documentation to the extent that such documents are included in the fields searched

Electronic data base consulted during the international search (name of data base and, where practicable, search terms used)

CNABS, CNTXT, DWPI, ENTXT, ENTXTC, WPABS, WPABSC, JPTXT, USTXT, CNKI: 中国石油化工股份有限公司, 荆少东, 石墨烯气凝胶, 石墨烯干凝胶, 胺溶液, 二氧化碳, CO2, 比表面积, 孔径, 孔容, 孔体积, 压缩强度, B酸, 布朗斯特酸, 布朗斯台德酸, 质子酸, 解吸, 再生, 催化, graphene aerogel, pore volume, +amine solution, aqueous, carbon dioxide, surface area, bronsted acid, protic acid, desorption, regeneration, catalyst

**C. DOCUMENTS CONSIDERED TO BE RELEVANT**

| Category* | Citation of document, with indication, where appropriate, of the relevant passages | Relevant to claim No. |
|---|---|---|
| A | CN 104925787 A (QINGDAO UNIVERSITY OF SCIENCE AND TECHNOLOGY) 23 September 2015 (2015-09-23) description, paragraphs 32-36, and embodiment 1 | 1-13 |
| A | CN 110681413 A (HUNAN UNIVERSITY) 14 January 2020 (2020-01-14) application example | 7-13 |
| A | CN 110155990 A (ANHUI JIANZHU UNIVERSITY) 23 August 2019 (2019-08-23) entire document | 1-13 |
| A | CN 114570178 A (SHANGHAI JIAO TONG UNIVERSITY et al.) 03 June 2022 (2022-06-03) entire document | 1-13 |
| A | CN 114931951 A (XIANGTAN UNIVERSITY) 23 August 2022 (2022-08-23) entire document | 7-13 |
| A | CN 114984725 A (XIANGTAN UNIVERSITY) 02 September 2022 (2022-09-02) entire document | 7-13 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 February 2024** | **13 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/143530**

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021117912 A1 (KOREA INSTITUTE OF ENERGY RESEARCH) 17 June 2021 (2021-06-17) entire document | 1-13 |

Form PCT/ISA/210 (second sheet) (July 2022)

**INTERNATIONAL SEARCH REPORT**
Information on patent family members

International application No.

**PCT/CN2023/143530**

| Patent document cited in search report | | | Publication date (day/month/year) | Patent family member(s) | | | Publication date (day/month/year) |
|---|---|---|---|---|---|---|---|
| CN | 104925787 | A | 23 September 2015 | CN | 104925787 | B | 15 May 2018 |
| CN | 110681413 | A | 14 January 2020 | CN | 110681413 | B | 21 October 2022 |
| CN | 110155990 | A | 23 August 2019 | None | | | |
| CN | 114570178 | A | 03 June 2022 | None | | | |
| CN | 114931951 | A | 23 August 2022 | None | | | |
| CN | 114984725 | A | 02 September 2022 | None | | | |
| WO | 2021117912 | A1 | 17 June 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311049627
- CN 109316903 A
- CN 106984333 A